# EUROPEAN PATENT APPLICATION

(11) **EP 0 851 596 A1**
(43) Date of publication of application: **01.07.1998**
(21) Application number: 97310248.6
(22) Date of filing: 17.12.1997
(51) Int. Cl.: H04B 1/38, H01Q 1/24

(54) **Mobile communications handsets**

(30) Priority: 23.12.1996 GB 9626763
(71) Applicant: NORTHERN TELECOM LIMITED, Montreal, Quebec H2Y 3Y4 (CA)
(72) Inventor: Smith, Martin Stevens, Chelmsford, Essex, CM1 4XQ (GB); Kitchener, Dean, Brentwood, Essex, CM15 9DX (GB); Kurtz, Michael, Ottawa, Ontario, KIN 5N7 (CA)
(74) Representative: Humphrey-Evans, Edward John

(57) **Abstract**

The power radiated from mobile communications handset antennas has tended to increase in order to increase the distances between the handsets and base stations or communications satellites. These handsets, in use, excite rf currents in the body and the body actually forms part of the radiator for the handset. Public fears have arisen over the use of such handsets, and in particular, repeated prolonged use. The present invention addresses this problem and provides a mobile communications handset arrangement comprising a microphone, an ear-piece, a transceiver, and an antenna; wherein the antenna is detachable from the handset, whereby reduced radiation effects are experienced by users.

## Description

### Field of Invention

The present invention relates to mobile communication handsets and in particular relates to an antenna configuration for mobile communication handsets.

### Background of the Invention

Mobile radio communication devices include a radio transmitter and receiver coupled to an antenna which emits and receives radio frequency signals to and from a cellular base station or a satellite station. The devices include a microphone for inputting audio signals to the transmitter and a speaker for outputting signals received by the receiver. The cellular base stations are situated across the countryside, arranged in cells, with each base station communicating with mobile radios within the area of coverage of that base station. Alternatively geo-stationary or orbiting satellites may be used.

Power radiating from the handset antennas has tended to increase in order to increase the distances between the handsets and base stations or communications satellites with which the handsets use to link up with public fixed telecommunications networks or other handsets. Ultimately, however, the ranges in many systems are uplink limited due to the relatively low transmitted power levels of hand portable mobile stations and because the output power of a transmitter on a mobile is limited to quite a low level to meet national regulations, which vary on a country to country basis.

These communication devices often have a standby configuration, wherein the device is collapsed for storage, and an active communication configuration, wherein the antenna is extended for optimum performance. For example, users prefer that the radio telephones are small enough in the standby mode to permit storage in a shirt or jacket pocket. In use the earphone of the handset is placed by the ear of the user and the antenna radiates adjacent the head; it is desirable for the device to be sufficiently long to position the speaker adjacent to the user's ear, with the microphone near the user's mouth and the antenna away from the user's body. It is desirable for the antenna to be positioned away from the users body since, inter alia, the users body is a ground plane that can interfere with radio frequency signal reception.

Recently concern has arisen over the proximity of handset aerials to the body in general and the brain in particular. These scares have drawn on research carried out by scientists in Australia, America and Sweden, which has suggested that problems such as senile dementia, cancer and asthma might be associated with the use of mobile handsets. Whilst there are conflicting reports suggesting that the handset, in use, excites RF currents in the body and the body actually forms part of the radiator for the handset, public fears have arisen over the use of such handsets, and in particular, repeated prolonged use. The output of a typical handset is around 0.25W average power, of which the user is exposed to a little below 0.1W. Safety limits are expressed in terms of specific absorption rate (SAR) by bodies such as the American National Standards Institute (ANSI).

Presently, a number of manufacturers are producing handsets which have printed antennas mounted internally of the handset casing; whilst this may reduce the amount of radiation directed towards the user by reason of the antenna being situated adjacent a ground plane (although the ground plane will also parasitically radiate), radiating powers need to be increased in order to compensate for the directionality and because the users hand will tend to attenuate the signals - with unknown long term effects.

One solution to the problem of cellular handset user irradiation is shown in EP-A-588 271 in the name of Alcatel Italia. A mobile telephone handset design has an antenna which provides a directional asymmetric radiation pattern. In use, the radiation is directed away from the head of the user. A screened whip antenna or a screened horizontal dipole antenna are two types of antenna which are discussed as being suitable designs. The performance of the handset is, nevertheless poor since the handset should have line of sight directionality vis-a-vis a base station which cannot be guaranteed. Similar problems arise with, for example, patch antennas and satellite communications. Whilst a momentary loss of contact with a base station may not necessarily result in a disconnection, the speech quality will be poor.

A further solution is proposed in EP-A-652645 (Philips) where a first quarter wavelength antenna and a second, preferably parasitic antenna is spaced 1/10 - 1/20 wavelengths away from each other in a direction normal to the head in normal use, whereby free space nulls are formed in the area adjacent to users head. EP-A-652645 does not discuss the effect of the different dielectric properties of users head on the formation of nulls; such nulls may well be diffracted to a portion outside the user's head.

There are a number of solutions involving the use of detachable antennas, however these are inadequate for a variety of reasons. One of these, DE4330436 (Alcatel), utilises a handset with a detachable antenna in a module that is linked opto-electronically to the handset. The antenna module may be placed away from a user's head, but the module requires additional circuitry to complete the opto-electronic link to the handset, and line of sight directionality must be maintained between the handset and antenna module to maintain the link which inhibits the user's movement.

Two other detachable antenna solutions are disclosed in DE29508792 (Brandl) and DE4239784 (Reinecker) in which the antenna is extended from the handset by use of a mechanical coupling arrangement such that the antenna is supported by the handset at a distance from the user's head. In use these arrangements are inconvenient and awkward, the extended antenna presenting a potentially hazardous projection which might injure another person for example, or at least restrict the movement of the user.

### OBJECT OF THE INVENTION

It is an object of this invention to provide an improved communications handset antenna arrangement wherein antenna uplink performance Is improved whilst minimising irradiation of a user, or at least to provide the public with a useful choice.

### SUMMARY OF THE INVENTION

In accordance with the present invention, there is provided a mobile communications handset arrangement comprising a detachable antenna module connected to the handset by a cable connection, the antenna module being self-supported independently of said handset.

The antenna element that can be employed can take various forms: a printed antenna using a dielectric mount such as a printed circuit board substrate is convenient and frequently of low cost. Depending on the frequency range and bandwidth, dipole antennas, crossed-slot patch antennas can be suitable for many cellular and satellite applications.

The antenna element can be connected to the handset by means of a coaxial cable, two wire cable or a fibre optic cable.

The antenna can be shaped such that it is of a general hook-shaped configuration, whereby, in use, it may be hooked around an object, such as a tubular support or an upstanding element. In addition to, or alternatively, the antenna can have a planar surface along at least one axis, whereby the antenna may be placed upon a flat, horizontal surface, such as a table top or similar. It is preferable that the antenna has a rubber or similarly grippy surface treatment, whereby the antenna can readily grip smooth surfaces. The transceiver can be incorporated in a handset arrangement. In a further embodiment, the microphone and ear-piece are incorporated in a handset arrangement.

In accordance with another aspect of the present invention, there is provided a method of operating a mobile communications handset arrangement comprising a detachable antenna module connected to the handset by a cable connection, the antenna module being self-supported independently of said handset;
the method comprising the steps of:
in a receive mode;
   receiving radio frequency signals with the antenna module and passing the radio frequency signals from the antenna module to the handset and,
in a transmit mode;
   passing radio frequency signals from the handset to the antenna module and radiating said signals.

In use the antenna may be placed upon a tubular element, an upstanding element or a flat surface, whereby the antenna is removed from the handset and the head of the user whereby radiation effects experienced by the user are substantially reduced.

### DESCRIPTION OF THE DRAWINGS

In order that the invention may be more fully understood, reference will now be made to the figures as shown in the accompanying drawing sheets, wherein:
Figure 1 shows an embodiment of the invention in use;
Figure 2 shows a perspective view of a first embodiment;
Figure 3 is a plan view of the first embodiment;
Figure 4 is a plan view of the first embodiment with the antenna separated;
Figure 5 shows a perspective view of a second embodiment;
Figure 6 is a plan view of the second embodiment; and
Figure 7 is a plan view of the second embodiment with the antenna separated.
Figures 8a and 8b show a plan view of a dipole antenna suitable for use with the invention;
Figure 9 is a plot of the return loss for the antenna shown in Figure 8;
Figure 10 is a plot of the azimuth radiation pattern for the antenna shown in figure 8;
Figures 12 shows an enclosure for the dipole antenna shown in figure 8;
Figure 13 shows a plan view of a crossed slot antenna;
Figure 14 is a cross-sectional view of the antenna shown in figure 13.

### DESCRIPTION OF THE INVENTION

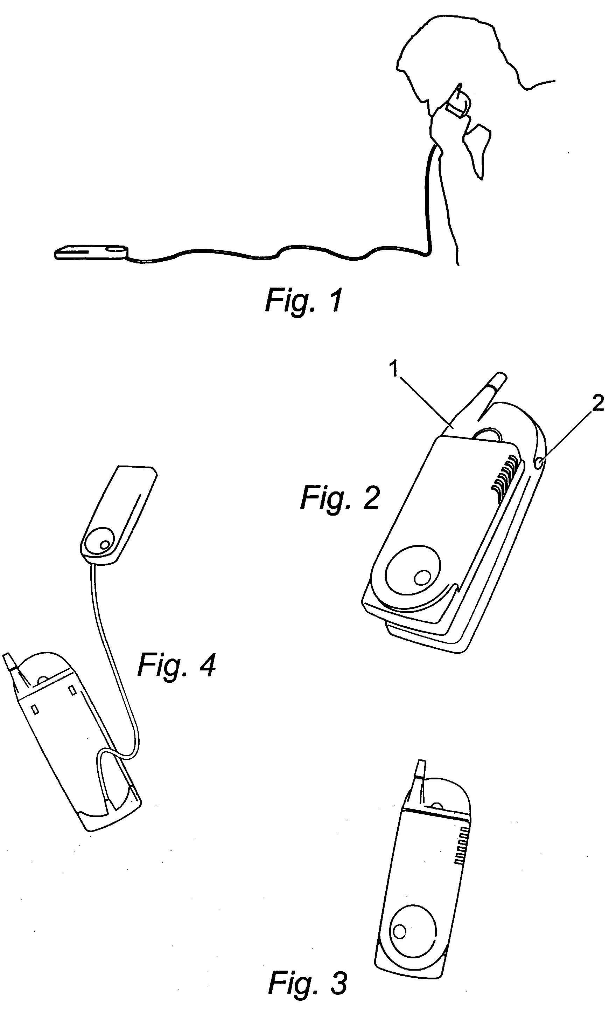

Referring now to figure 1, the handset is shown being employed by a user; the antenna element resting upon a tabletop or similar. The handset is coupled by a wire to the antenna. Conveniently, the wire is retained within either the handset or the antenna member in a spool when the handset is in a standby mode. By positioning the antenna a distance from the body, and in particular the head of the user, the body is less susceptible to ill harm from the radiation effects, and in the case of satellite communications, the antenna can be more favourably be positioned with respect to the satellite, such as on a horizontal surface whereby the antenna is directed upwardly. It can be seen that the handset is equipped with a monopole antenna which can be employed in the standby mode, or, if desired, in a normal mode of operation when it is inconvenient or disadvantageous to employ the separable antenna.

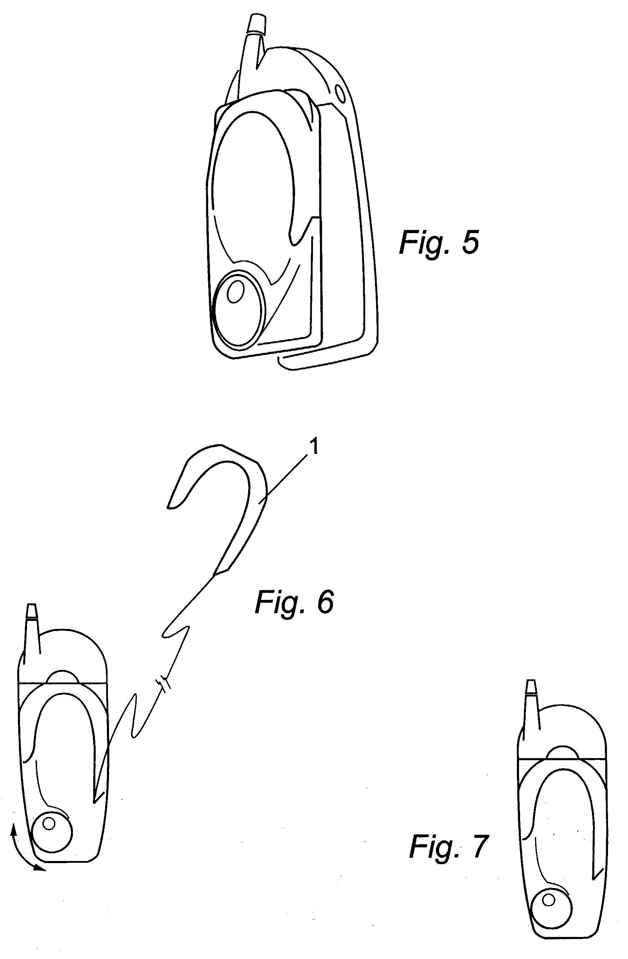

Figure 2 shows in greater detail a first configuration, with the antenna member comprising a plastics moulding housing a generally planar antenna element, such as has been found suitable for satellite communications. Typically a printed antenna element of planar dimensions 5 cm by 5 cm provide good reception characteristics for Inmarsat personal communications. The antenna member is shown with a release button for a resiliently biased catch for connection with the handset whereby the antenna is securely attached to the body. of the handset It may be preferable, however, that alternative retention means be employed, for instance opposed clip engagement means on either side of one or other of the antenna member or the handset. It can be seen, especially with reference to Figure 5, that the handset may retain the same overall configuration, irrespective of the antenna employed, with the handset employing a different mount for the separate antenna carried permanently with the handset. Figures 3 and 4 show plan views of the handset with the planar antenna member in a stored and in use configuration, respectively. In this embodiment, the antenna member carries the spool for winding in the antenna wire.

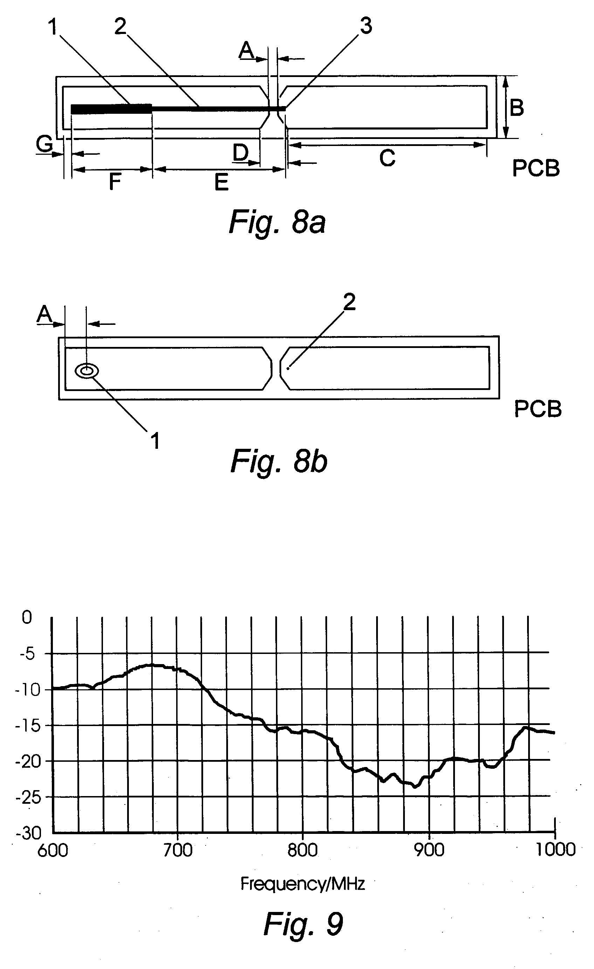

Figure 5 shows in greater detail a second configuration, with the antenna member comprising a generally hook shaped element. It has been found that this configuration, by having a planar surface along one side is equally suitable for placement on a flat surface or about, for example, a tubular element or over the edge of an upstanding member, such as an office partition or similar. A rubberised surface is advantageous in that the antenna will not easily slide off smooth surfaces. The hook can be symmetrical, both about the two arms of the hook and/or about a plane cutting through the antenna. Ideally the spool device for reeling in the wire connecting the antenna to the handset is retained on the reception member associated with the handset, rather than with the antenna itself. Alternatively, the wire could be wrapped around the antenna element in standby mode. This type of configuration is obviously more suited to dipole/monopole antenna applications, but the hook arrangement could be associated with a planar antenna element, if required. Typically a dipole antenna element need only be 8 cm when operating at PCS frequencies. The antenna element may be retained by means of a resiliently biased catch, or, for example, by means of the inherent elasticity of the antenna member. Again, it may be preferable, however, that alternative retention means be employed. Figures 6 and 7 show plan views of the handset with the antenna member in stored and in use configurations, respectively.

Referring now to Figures 8a and 8b, there is shown a first antenna of a type suitable to be incorporated in an embodiment the invention, with dimensions shown suitable for operation at 860 MHz. The total length of the structure corresponds to a half wavelength. The structure is printed on standard printed circuit board, in this case 1.6 mm thick FR4, with a microstrip track on a first surface and the dipole arms on a second surface. The dipole arms could be arranged on separate sides, when there is no need for a via through to the dipole arm from the microstrip track. The input connector for connecting to the feed cable is shown in Figure 8b (which shows the first surface of the board) and is positioned at the end of one of the dipole arms, which corresponds to the region of lowest current density for the dipole. This helps to isolate the feed cable from the dipole. A microstrip track is positioned to connect with the dipole feed point (centre of the structure). This can be provided as a 50Ω line at the connector, but beyond this an impedance matching section can be included for optimum power coupling to the antenna.

The second dipole arm and feed track are printed on opposite sides of a glass fibre printed circuit board material such as FR4, which has a dielectric constant of approximately 4. This relatively high dielectric constant means that the microstrip feed track widths can be kept small, and this helps to minimise any radiation from them. The quarter wavelength dipoles are printed on the dielectric by well-known techniques; the quarter wavelength dipoles are not strictly rectangular but have triangulated sides to improve impedance matching and increase bandwidth.

Another advantage of printing the dipole and its feed track on a single board is that the antenna consists of a single part. This means that assembly or mechanical tolerance issues are reduced, and accordingly manufacturing costs are reduced relative to other, multi-band types of antenna. The antenna can easily be enclosed in a protective plastics cover made in accordance with the invention.

Ideally the input impedance for the dipole should be 50Ω since this is the most common impedance used for microwave transmission lines. Thus, a 50Ω coaxial cable is most likely to be connected to the antenna connector, to provide the connection to a user terminal. In practice it has been found that the antenna input impedance is higher than 50Ω and so some impedance matching is required. This need not be a problem as the matching network can be incorporated as an integral part of the structure in the microstrip feed track. In Figure 8 it can be seen that a quarter wavelength microstrip impedance transformer has been used. Note that the quarter wavelength is not that of free space, but that of the microstrip line which will be shorter than for free space. More complex matching networks can be implemented, microstrip stubs can be used for adding parallel inductance or capacitance; lumped elements can be used if this is more convenient.

Despite the fact that an unbalanced transmission line feed is used for this antenna no balun is required at the feed point. This is because there are only two paths for the current to flow in the feed region, and these paths consist of dipole arms. This is true because the microstrip ground plane and the lower dipole arm are coincident. For cases where the feed line is not an integral part of the structure there is generally a third current path. For a coaxial cable connected directly to the dipoles arms the current from the inner conductor flows along one dipole arm, but the current from the inner surface of the cable outer conductor flows both on the dipole arm and onto the outer surface of the cable. This causes an asymmetric current distribution on the dipole, and the current on the outer surface of the cable radiates resulting in perturbations in the radiation pattern. This is why a choke must be incorporated into the design to prevent current flow along the 'third' path. In the current design there is no 'third' path and the structure is inherently balanced. No choke is required at the cable connection point for the invention because the connector is at a position of low current density on the dipole, and so no significant current is induced on the outer surface of the cable.

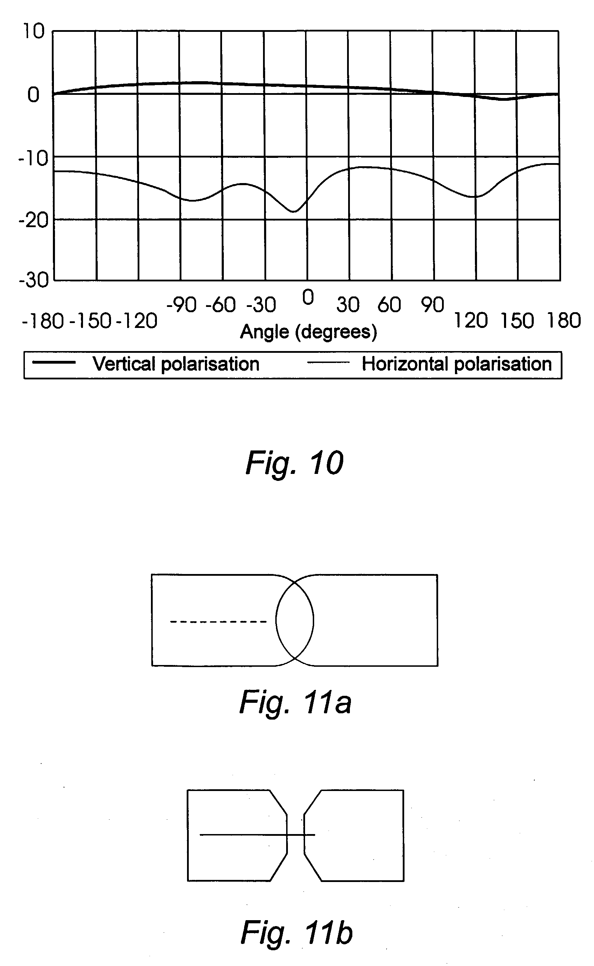

In Figure 9 the return loss is shown for the particular embodiment of the invention shown in Figure 8. This can be seen to have a return loss of >10dB from approximately 730 MHz to beyond 1GHz. The azimuth radiation pattern at 860 MHz is then shown in Figure 10. This is clearly omnidirectional, with a power gain comparable to a half wave dipole.

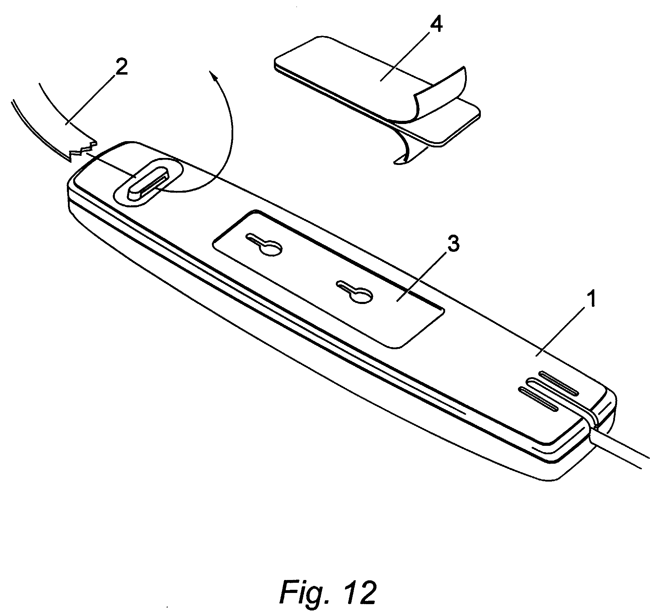

Figure 11a shows a dipole antenna element made in accordance with the invention wherein the tapered sections overlap. Figure 11b shows an antenna having triangular tapered sections. Figure 12 details one possible enclosure for an antenna housing to protect the antenna structure and provide a user-friendly means for deployment thereof. The enclosure can be attached to a wall by screw-threaded fastening means, double sided adhesive tape or otherwise, connected to a base and retained by resiliently biased snap-connection means, or hung from a drape or another structure. Other means of positioning and fastening are possible. An antenna as described above is

Antenna suitable for satellite signals/communications can also be employed. Conveniently microstrip patch antennas are employed. An example of such antennas is described in Applicant's patent US 4,783,661. Such antennas comprise a dual-band circularly polarised arrangement comprising first and second multiple patch antenna structures dimensioned to operate at two distinct frequencies. Each antenna structure consists of similar patches of electrically conductive material with the patches of the first structure being spaced from a ground plane by dielectric material and the patches of the second structure being spaced from the patches of the first structure by dielectric material. The patches of the second structure each overlie a corresponding patch of the first structure and each have a dimension λₘ⁽²⁾/4 which is less than the dimension λₘ⁽¹⁾/4 of the corresponding patch of the first structure. Feed means are provided for each of the patches with the patches of both structures being disposed in the planes of the patches so that the radiating edges of the two patch structures form superimposed antenna structures.

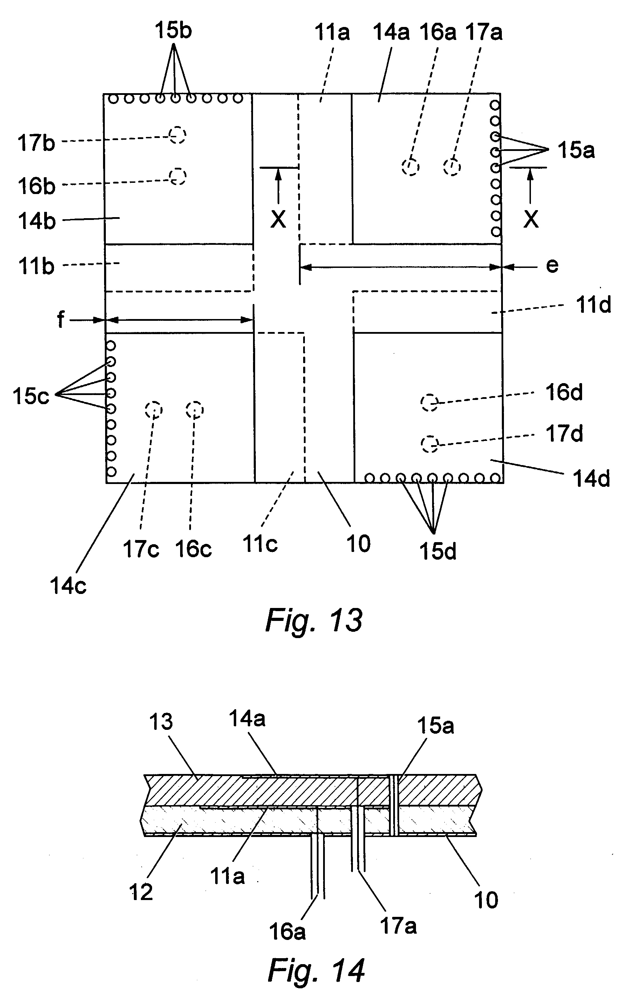

Referring now the Figures 13 and 14, there is shown, respectively in plan view and cross section, a dual-band antenna, comprising two crossed slot antennas superimposed on a common ground plane 10. The first crossed slot antenna is formed of a set of four patches 11a-11d having effective lengths λₘ⁽¹⁾/4 arranged in rotation so that their radiating edges form the crossed slot structure. Conveniently the patches 11a-11d are copper foil carried on one face of a sheet of dielectric material 12 the other face of which carries the ground plane copper foil 10. Superimposed on the first antenna is a second dielectric sheet 13 carrying a second set of four copper foil patches 14a-14d each have an effective length of λₘ⁽²⁾/4, where λₘ⁽¹⁾ is greater than λₘ⁽²⁾. Both sets of patches are shorted to the ground plane 10 by common sets of shorting pins 15a-15d. The patches of the first set are fed by respective coaxial feeds 16a-16d the outer conductors of which are connected to the ground plane. The patches of the second set are fed by respective coaxial feeds 17a-17d the outer conductors of which pass through the ground plane and are connected to both the ground plane and the patches of the first set. It is to be noted that the radiating edges of each stacked pair of patches are arranged so that the top patch doe not obstruct the radiation from the bottom patch.

For the example illustrated, with a difference between frequency f₁ and f₂ of 30% approximately, where f₂ is higher than f₁ (with corresponding wavelengths λₘ⁽²⁾ and λₘ⁽¹⁾ the common shorting plane, using either a row of metal pins as illustrated or a continuous metal strip, can be used, having the radiating edges appropriately placed with respect to each other and to the centre lines of the crossed slot. For other frequency separations, separate shorting planes might be preferred. Alternatively, microstrip substrates with different dielectric constants could be used to alter the relative patch lengths involved (approximately equal to λₘ⁽¹⁾/4ε₁^{1/2} and λₘ⁽²⁾/4ε₂^{1/2}).

The lateral dimensions of the antenna are governed by λₘ⁽¹⁾ (the larger wavelength) and εᵣ (the relative permittivity) of the microstrip substrate. The approximate size of the square side of the structure is approximately λₘ⁽¹⁾/2εᵣ^{1/2} The exact size is determined by the width chosen for the patches and the "slot" width (i.e. the separation between adjacent patch edges).

The thickness of the antenna is related to the required bandwidths at the two frequencies f₁ and f₂. With a simple feed probe connected directly to the patch, very thin substrates (height considerably less than patch dimensions) imply bandwidths of a very few per cent. Thicker substrates offer bandwidths approximately 5%-10%, or greater if broad band techniques are used.

At satellite communications frequencies the size of the antennas is small, of the order of 5-10 cm square, and as such can easily be placed within the antenna arrangements shown in Figures 1 to 7.

The antenna can be attached to the handset by a variety of means: the simplest and cheapest would be a coaxial cable connection. This would suffer from a relative inability to twist and flex compared to a two wire cable. Typically, at the frequencies of operation of cellular networks such as PCS and GSM, a two wire cable would radiate and thus not be acceptable. Nevertheless, the cable could operate at an intermediate frequency, although a frequency converter would be required to be situated with the antenna. The intermediate frequency could be chosen such that it is the same as a frequency typically employed in handset configurations, whereby no additional circuitry as such is required. Alternatively, the cable could be fibre optic cable, which is lightweight and the communications between the handset and the antenna could be optical - a drawback with such a configuration, however is that an optical detector and transmitter would be required to be associated with both the handset and the antenna.

## Claims

1. A mobile communications handset arrangement comprising a detachable antenna module connected to the handset by a cable connection, the antenna module being self-supported independently of said handset.

2. A mobile communications handset arrangement according to claim 1, wherein the antenna module comprises one of the following group:
a printed antenna;
a dipole antenna;
a crossed slot patch antenna.

3. A mobile communications handset arrangement according to claim 1, wherein the cable connection comprises one of the following group:
a coaxial cable;
a fibre optic cable;
a parallel wire arrangement.

4. A mobile communications handset arrangement according to claim 1, wherein the antenna module is of a general hook-shaped configuration.

5. A mobile communications handset arrangement according to claim 1 wherein the antenna module has a planar surface along at least one axis.

6. A mobile communications handset arrangement according to claim 5, wherein the antenna has a rubberised contact surface on said planar surface.

7. A method of operating a mobile communications handset arrangement comprising a detachable antenna module connected to the handset by a cable connection, the antenna module being self-supported independently of said handset;
the method comprising the steps of:
in a receive mode;
receiving radio frequency signals with the antenna module and passing the radio frequency signals from the antenna module to the handset and,
in a transmit mode;
passing radio frequency signals from the handset to the antenna module and radiating said signals.
